Europäisches Patentamt

European Patent Office

Office européen des brevets

(11) Publication number: **0 182 075**
A2

# EUROPEAN PATENT APPLICATION

(21) Application number: **85112856.1**

(51) Int. Cl.⁴: **G 01 N 21/25**

(22) Date of filing: **10.10.85**

(30) Priority: **21.11.84  FI 844576**

(43) Date of publication of application: **28.05.86**
**Bulletin 86/22**

(84) Designated Contracting States: **AT BE CH DE FR GB IT
LI LU NL SE**

(71) Applicant: **EFLAB OY, Pulttitie 9, F-00810 Helsinki 81 (FI)**

(72) Inventor: **Kovanen, Ilkka, Erkki Melartinintie 7 G 64,
SF-00720 Helsinki (FI)**
Inventor: **Kainiemi, Aimo, Vilniementie 12 B 8,
SF-00270 Espoo (FI)**

(74) Representative: **Patentanwälte Müller-Boré, Deufel,
Schön, Hertel, Lewald, Otto,
Postfach 26 02 47 Isartorplatz 6, D-8000 München 26 (DE)**

(54) **Method for securing of location.**

(57) Method for securing the location of a sample pit (10) in an optical apparatus of measurement. The apparatus is provided with a measurement tip (6), which is lowered partly into the sample pit. Measurement is possible only when the measurement tip is in its lower position.

Method for securing of location

The invention concerns a method for the measurement of optical density and an apparatus in which a sample disc comprising several sample vessels is displaced underneath the measurement tip so that each sample vessel can be measured. More specifically, the invention concerns a method by means of which the exact location of the sample pit underneath the measurement tip can be secured.

For example, in photometric measurements a so-called microdisc is used as the base for the samples, the samples to be studied being dosed into the pits in the said disc. The disc is displaced on the measurement plane of the photometer so that the pit to be measured at each particular time becomes positioned facing the lower tip of the measurement head.

From the US Patent 4,115,010 a microdisc reading device is known, in which the pits in one pit line of the disc are measured at a time. The device has a disc displacement mechanism, by means of which the exact location of the disc underneath the measurement tips is secured. Once the disc has adopted its correct location, the measurement tips are lowered into the sample pits so as to perform the measurement.

On the other hand, from the US Patent No. 4,299,493 a microdisc reading device is known which has one measurement tip, the pit to be measured being shifted to underneath the said tip. The measurement tip has a globular tip, but its diameter is larger than the pit. The measurement tip is attached to a resilient arm, which presses the tip against the pit. If the pit is not exactly at the correct location, the disc tends to be shifted by the effect of the force of the arm until the measurement tip and the pit face each other.

The object of the present invention is to provide a simple arrangement for securing the exact location of the sample disc underneath the measurement tip, in which said arrangement, moreover, performance of the measurement is prevented if the pit to be measured is not exactly in its correct location. A further object of the invention is to provide an arrangement which performs the measurement automatically as soon as the pit is exactly in its correct location.

The sample-disc reading device in accordance with the invention includes a vertically displaceable measurement tip. The end of the measurement tip is in such a way narrowed that it can penetrate a certain distance into the sample pit. Moreover, the device is provided with a detector which detects the movement of the measurement tip and which is set so as to prevent performance of measurement unless the measurement tip is in the lower position. In this way, the measurement can be carried out only when the desired pit and the measurement tip are exactly facing each other.

A preferred embodiment of the invention will be illustrated in more detail with reference to the attached drawings.

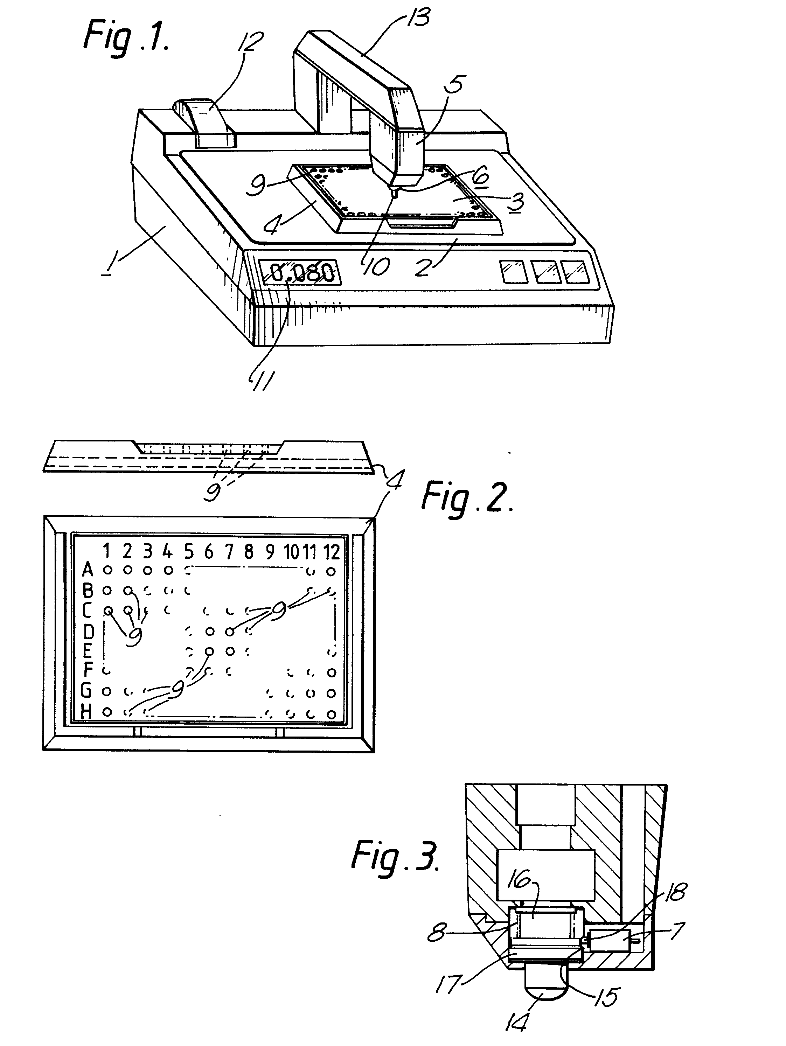

Figure 1 shows a photometer onto whose measurement plane the pit disc to be measured has been introduced,

Figure 2 shows the pit disc as well as its measurement frame, and

Figure 3 is a sectional view of the measurement head.

The pit disc 3 to be measured is introduced onto the measurement plane 2 of the photometer so that the pit 10 to be measured becomes positioned facing the lower tip 6 of the measurement head 5. The pit 10 concerned is measured by means of photometric methods. The measurement result is indicated to the operator in the display unit 11, produced as an output by means of the printer 12 of the apparatus, or it is transmitted to an auxiliary apparatus, e.g. to an external printer. The pit disc 3 can be displaced freely on the measurement plane 2 from pit to pit, i.e. the pits 9 can be measured in any sequence whatsoever.

The locations of the pits 9 in the disc are coded in the 96-pit pit disc so that the 12 vertical lines are provided with numbers from left to right in the numerical order 1 to 12, and the 8 horizontal lines are denoted with letters from the top downwards in the alphabetical order A to H. On the measurement frame 4 and below the measurement plane 2, there may be indicator structures by means of which the pit 10 to be measured can be identified.

An indicator structure may consist, e.g., of magnetic rods placed at the edges of the sample frame as well as of inductive approach detectors fitted underneath the measurement plane. The magnetic rods pass a signal only to the detector placed straight underneath. In this way, the location of the disc can be identified precisely in each particular case.

The measurement tip is cylindrical, and at its upper portion there is an annular flange 17. The end of the optical system 16 extends to inside the annular flange 17. The beam of light coming from a source of light placed below the measurement plane passes through the pit to be measured and through the measurement tip 6 and the optical system 16 further to the detector. The measurement tip is placed in a vertical bore provided in the measurement head, in which said bore it may move vertically. The opening of the bore is, however, smaller than the flange 17, so that only the end of the measurement tip projects out of the bore.

Moreover, the measurement head is provided with a microswitch 7, whose lever 18 is mounted so as to rest against a widening 15 of the flange 17 when the measurement tip is not in the lower position. The switch 7 is connected to the measurement system of the apparatus and set so as to prevent measurement when the switch is on. Correspondingly, the apparatus is provided with an automatic system which performs measurement as the switch is switched off.

For the time of measurement, the pit disc to be measured is placed in a measurement frame 4, and the frame is placed on the measurement plane 2. The measurement arm 13 is locked so that the measurement tip 6 is in a pit and lowered down so that the detector 7 is not switched on, and thus the measurement can be carried out. When the frame 4 is shifted, the measurement tip is pressed into the measurement head, and the widening 15 of the measurement tip acts upon the detector lever 18, whereby the measurement is prevented. Thus, measurement cannot be performed, e.g., when the measurement tip is between the pits in the pit disc. When the disc is shifted further so as to face the next pit to be measured, the measurement tip is returned by the effect of a spring 8 into a pit in the pit disc. At the same time, the measurement tip releases the detector and thereby permits measurement of the pit concerned.

The measurement tip is thicker than the diameter of the sample pit, but its lower tip 14 is narrowed, whereby, in the measurement position, the edge of the sample pit rests against the lower tip. The lower tip 14 and the edge of the sample pit are shaped so that, when moving to the side, the edge of the pit readily pushes the measurement tip 6 upwards.

The height of the measurement arm 13 relative the measurement plane 2 can preferably be adjusted and locked at the desired height, whereby it is possible to use pit discs of different heights in the apparatus.

The optical system and the computer and output devices necessary for the equipment can be prepared, as required, out of components known and available in the field concerned.

5

In the apparatus of the example, the measurement tip is fitted so as to receive the light coming from the sample. As an alternative, it is possible to pass the light through the measurement tip to the sample, in which case the detector is placed underneath the measurement plane.

6

WHAT IS CLAIMED IS:

1. Method for securing the location of a sample pit in a method for the measurement of optical density, wherein a sample disc (3) comprising several sample pits is displaced on the measurement plane (2) so that the desired sample pit (10) is located underneath the measurement tip (6) of the measurement head (5) and the desired measurement is carried out, c h a r a c t e r i z e d in that the sample disc (3) is shifted to underneath the measurement tip (6), the outer diameter of the said tip being at least equal to the inner diameter of the sample pit (10) and the lower tip (14) of the said measurement tip being narrowed; that, when the desired sample pit (10) has been brought underneath the measurement tip, the measurement tip is allowed to be pushed downwards until the narrowed part of the tip meets the edge of the sample pit; that, when the sample disc is displaced, the measurement tip is pushed upwards by means of the edge of the sample pit; and that the movement of the measurement tip is detected by means of a detector (7), which is preset so as to prevent measurement when the measurement tip is placed above a certain height.

2. Device for securing the location of a sample pit in an apparatus of measurement of optical density, which is provided with a measurement head (5) and therein a measurement tip (6) for performing the measurement from the sample pit placed underneath the measurement head, the said securing device being c h a r a c t e r i z e d in a measurement tip (5) moving in the measurement head (6) vertically and in a detector (7) of the movement of the measurement tip, which said detector is connected so as to prevent measurement when the measurement tip is located above a certain height.

3. Securing device as claimed in claim 2, c h a r a c t e r i z e d  in that the measurement tip is pressed downwards by a spring (8).

4. Securing device as claimed in claim 2, c h a r a c t e r i z e d  in that the detector is a mechanical detector (7).

5. Securing device as claimed in claim 2, c h a r a c t e r i z e d  in that the detector is connected so as to give a starting signal for the measurement when the measurement tip is placed below a certain level.

6. Securing device as claimed in claim 2, c h a r a c t e r i z e d  in that the distance of the measurement arm (13) from the measurement plane is adjustable.

0182075

Fig .1.

0.080

Fig .2.

|   | 1 | 2 | 3 | 4 | 5 | 6 | 7 | 8 | 9 | 10 | 11 | 12 |
|---|---|---|---|---|---|---|---|---|---|---|---|---|
| A | | | | | | | | | | | | |
| B | | | | | | | | | | | | |
| C | | | | | | | | | | | | |
| D | | | | | | | | | | | | |
| E | | | | | | | | | | | | |
| F | | | | | | | | | | | | |
| G | | | | | | | | | | | | |
| H | | | | | | | | | | | | |

Fig .3.